# EUROPEAN PATENT APPLICATION

(11) **EP 4 636 636 A1**
(43) Date of publication of application: **22.10.2025**
(21) Application number: 23921279.8
(22) Date of filing: 30.10.2023
(51) Int. Cl.: G06F 30/15, B62D 25/00, G06F 30/23

(54) **AUTOMOBILE BODY DESIGN METHOD, DEVICE AND PROGRAM, AND AUTOMOBILE BODY MANUFACTURING METHOD**

(30) Priority: 09.02.2023 JP 2023018059
(71) Applicant: JFE Steel Corporation, Tokyo 100-0011 (JP)
(72) Inventor: AGEBA, Ryo, Tokyo 100-0011 (JP); HIGAI, Kazuhiko, Tokyo 100-0011 (JP); SHIOZAKI, Tsuyoshi, Tokyo 100-0011 (JP)
(74) Representative: Grünecker Patent- und Rechtsanwälte PartG mbB
(86) International application number: PCT/JP2023/039074
(87) International publication number: WO 2024/166456

(57) **Abstract**

An automotive body design method according to the present invention causes a computer to execute each of following steps for designing an automotive body in which a resin material is patched or coated to surfaces of automotive parts constituting a body-in-white structure 100 of the automotive body and vibration-damping properties of a vibration noise reduction target part in the body-in-white structure 100 are improved, the automotive body design method including an optimization analysis model generation step S1 of generating an optimization analysis model of performing optimization analysis on an optimized shape of the resin material to be patched or coated to all or some of the automotive parts in the body-in-white structure 100; and a resin material optimization analysis step S3 of performing the optimization analysis for obtaining the optimized shape of the resin material model in the generated optimization analysis model.

## Description

### Field

The present invention relates to automotive body design method, apparatus, and program which are for designing an automotive body in which vibration-damping properties of a part that is a reduction target of vibration noise (vibration and noise) in a body-in-white structure of an automotive body are improved, and a manufacturing method of an automotive body.

### Background

In recent years, development of an efficient design method for an automotive body excellent in vibration-damping properties has been required more than ever. One of the major factors is the spread and expansion of battery powered vehicles. This is because the battery powered vehicle does not generate vibration and noise due to an internal combustion engine, and thus sensitivity of an occupant to vibration and noise due to other vibration sources is increased. In addition, a battery powered vehicle needs to be equipped with a large-capacity battery, and there is a case where a body frame structure is greatly different in combination with a protective structure thereof. Accordingly, since a vibration transfer path is different from that of a gasoline vehicle in the related art, empirical rules in the related art regarding vibration damping structures for reducing vibration and noise are not applicable.

Therefore, an optimization analysis technique using a computer has been proposed as means for obtaining a design guideline of a high vibration damping structure without requiring empirical rules regarding the design of an automotive body. For example, Patent Literature 1 discloses a technique of dividing a vibration transmission frame component into a plurality of regions and obtaining an optimal plate thickness for each of the divided regions in order to reduce vibration noise caused by vibration transmitted from a vibration source to a panel part via the vibration transmission frame component in an automobile. In addition, Patent Literature 2 discloses a technique of improving the vibration-damping properties of an automobile component including a metal plate-shaped member by coating or patching a resin layer to an inner surface of the plate-shaped member and adhering a metal plate vibration suppressing member to the surface on the opposite side of the resin layer.

In addition, as a technique of efficiently designing a high-performance automotive body, for example, in Patent Literature 3, the optimization analysis for obtaining an optimized shape of an automotive part using a computer is applied. The technique is a method of obtaining an optimized shape of an automotive part by setting a design space, a constraint condition, and a loading condition of the automotive part to be optimized, and deleting an unnecessary part in the design space so as to satisfy an objective condition regarding body performances such as stiffness and weight of the automotive body.

### Citation List

### Patent Literature

Patent Literature 1: Japanese Patent No. 6769536
Patent Literature 2: JP 2022-132725 A
Patent Literature 3: Japanese Patent No. 5585672

### Summary

### Technical Problem

In the technique of Patent Literature 1, since the plate thickness of each region in the vibration transmission frame component is changed, the vibration-damping properties of the panel part that is a vibration noise reduction target is improved, but other body performances (for example, body stiffness) may be deteriorated, and it is difficult to achieve both the vibration-damping properties and other body performances.

In addition, in the technique of Patent Literature 2, since the positions and ranges of the resin layer and the vibration suppressing member provided on the plate-shaped member of the automobile component are not defined at all, it is necessary to decide the positions and ranges of the resin layer and the vibration suppressing member through trial and error in order to sufficiently improve the vibration-damping properties of the automobile component. Furthermore, the technique of Patent Literature 2 is directed to improving the vibration-damping properties when the automobile component is vibrated alone. Therefore, it is unclear whether the vibration-damping properties of a part as the reduction target of vibration noise in the automotive body can be efficiently improved by the technique of Patent Literature 2 in a case where vibration is input to the entire automotive body.

In addition, according to the method disclosed in Patent Literature 3, it is possible to obtain an optimal three-dimensional shape of an automotive part that achieves objective functions such as minimization of strain energy, minimization of generated stress, and maximization of impact absorption energy with respect to a plurality of set input loads. Therefore, in order to improve the vibration-damping properties of a body-in-white structure of the automotive body, it is conceivable to apply the optimization analysis technique disclosed in Patent Literature 1 to the optimization of the frequency response regarding the vibration and acoustic field to obtain the optimized shape of the automotive part that improves the vibration-damping properties. However, as a result of trying this, the optimized shape of the automotive part becomes a shape scattered three-dimensionally and a useful shape with respect to the actual body-in-white structure cannot be obtained. Therefore, even in a case where an optimal three-dimensional shape is obtained by the optimization analysis technique, a component shape that can be manufactured by press forming or the like cannot be obtained from the obtained optimized shape.

The present invention has been made to solve the above problems, and an object of the present invention is to provide automotive body design method, apparatus, and program for designing an automotive body in which vibration-damping properties of a part that is a reduction target of vibration noise are effectively improved while maintaining body performances other than the vibration-damping properties. Furthermore, another object of the present invention is to provide a manufacturing method of an automotive body for manufacturing the automotive body in which vibration-damping properties of a part that is a reduction target of vibration noise are improved while maintaining body performances other than the vibration-damping properties such as body stiffness.

### Solution to Problem

To solve the problem and achieve the object, an automotive body design method according to the present invention is the method causing a computer to execute each of following steps for designing an automotive body in which a resin material is patched or coated to surfaces of automotive parts constituting a body-in-white structure of the automotive body and vibration-damping properties of a vibration noise reduction target part, which is a reduction target of vibration noise in the body-in-white structure, are improved. The automotive body design method includes: an optimization analysis model generation step of generating an optimization analysis model of performing optimization analysis on an optimized shape of the resin material to be patched or coated to all or some of the automotive parts in the body-in-white structure; and a resin material optimization analysis step of performing the optimization analysis using the generated optimization analysis model, wherein the optimization analysis model generation step includes a design space setting step of setting a design space to be a target of the optimization analysis along the surfaces of all or some of the automotive parts in the body-in-white structure, a resin material model generation step of generating, in the set design space, a resin material model that is modeled with shell elements or solid elements and performs optimization analysis processing, and a connecting processing step of connecting the generated resin material model to the automotive parts in the body-in-white structure, and the resin material optimization analysis step includes a material property setting step of setting at least an elastic coefficient, a density, and an attenuation rate as material properties of the resin material model in the optimization analysis model, a vibration input condition setting step of setting a vibration input condition regarding vibration given to the optimization analysis model in the optimization analysis, an optimization analysis condition setting step of setting, as an optimization analysis condition, an objective function regarding vibration characteristics used for evaluation of vibration-damping properties of the vibration noise reduction target part in the optimization analysis model, and a constraint condition regarding a weight or volume of the resin material model, and an optimization analysis step of performing optimization analysis for obtaining the optimized shape of the resin material model in the optimization analysis model under the vibration input condition and the optimization analysis condition.

Moreover, in the design space setting step, the design space may be set in a gap between the automotive parts.

Moreover, in the design space setting step, a two-dimensional space along only one surface of the automotive parts may be set as the design space, and in the resin material model generation step, the resin material model may be modeled with shell elements.

Moreover, in the optimization analysis condition setting step, the objective function may be to minimize a frequency response value of any one of acceleration, inertance, or equivalent emission power in a predetermined frequency band of the vibration noise reduction target part, or minimize a function using the values as variables.

Moreover, an automotive body design apparatus according to the present invention is the apparatus that designs an automotive body in which a resin material is patched or coated to surfaces of automotive parts constituting a body-in-white structure of the automotive body and vibration-damping properties of a vibration noise reduction target part, which is a reduction target of vibration noise in the body-in-white structure, are improved. The automotive body design apparatus includes: an optimization analysis model generation unit that generates an optimization analysis model of performing optimization analysis on an optimized shape of the resin material to be patched or coated to all or some of the automotive parts in the body-in-white structure; and a resin material optimization analysis unit that performs the optimization analysis using the generated optimization analysis model, wherein the optimization analysis model generation unit includes a design space setting unit that sets a design space to be a target of the optimization analysis along the surfaces of all or some of the automotive parts in the body-in-white structure, a resin material model generation unit that generates, in the set design space, a resin material model that is modeled with shell elements or solid elements and performs optimization analysis processing, and a connecting processing unit that connects the generated resin material model to the automotive parts in the body-in-white structure, and the resin material optimization analysis unit includes a material property setting unit that sets at least an elastic coefficient, a density, and an attenuation rate as material properties of the resin material model in the optimization analysis model, a vibration input condition setting unit that sets a vibration input condition regarding vibration given to the optimization analysis model in the optimization analysis, an optimization analysis condition setting unit that sets, as an optimization analysis condition, an objective function regarding vibration characteristics used for evaluation of vibration-damping properties of the vibration noise reduction target part in the optimization analysis model, and a constraint condition regarding a weight or volume of the resin material model, and an optimization analysis unit that performs optimization analysis for obtaining the optimized shape of the resin material model in the optimization analysis model under the vibration input condition and the optimization analysis condition.

Moreover, an automotive body design program according to the present invention is the program for designing an automotive body in which a resin material is patched or coated to surfaces of automotive parts constituting a body-in-white structure of the automotive body and vibration-damping properties of a vibration noise reduction target part, which is a reduction target of vibration noise in the body-in-white structure, are improved. The automotive body design program causes a computer to function as: an optimization analysis model generation unit that generates an optimization analysis model of performing optimization analysis on an optimized shape of the resin material to be patched or coated to all or some of the automotive parts in the body-in-white structure; and a resin material optimization analysis unit that performs the optimization analysis using the generated optimization analysis model, wherein the optimization analysis model generation unit includes a design space setting unit that sets a design space to be a target of the optimization analysis along the surfaces of all or some of the automotive parts in the body-in-white structure, a resin material model generation unit that generates, in the set design space, a resin material model that is modeled with shell elements or solid elements and performs optimization analysis processing, and a connecting processing unit that connects the generated resin material model to the automotive parts in the body-in-white structure, and the resin material optimization analysis unit includes a material property setting unit that sets at least an elastic coefficient, a density, and an attenuation rate as material properties of the resin material model in the optimization analysis model, a vibration input condition setting unit that sets a vibration input condition regarding vibration given to the optimization analysis model in the optimization analysis, an optimization analysis condition setting unit that sets, as an optimization analysis condition, an objective function regarding vibration characteristics used for evaluation of vibration-damping properties of the vibration noise reduction target part in the optimization analysis model, and a constraint condition regarding a weight or volume of the resin material model, and an optimization analysis unit that performs optimization analysis for obtaining the optimized shape of the resin material model in the optimization analysis model under the vibration input condition and the optimization analysis condition.

Moreover, a manufacturing method of an automotive body according to the present invention is the manufacturing method for manufacturing an automotive body in which a resin material is patched or coated to automotive parts constituting a body-in-white structure of the automotive body and vibration-damping properties of a vibration noise reduction target part, which is a reduction target of vibration noise in the body-in-white structure, are improved. The manufacturing method includes: obtaining an optimized shape of the resin material by using the automotive body design method according to the present invention; determining the optimized shape and a position of the resin material to be patched or coated to the automotive parts on a basis of the obtained optimized shape of the resin material; and patching or coating the resin material of which the optimized shape and the position are determined, to the automotive parts in the body-in-white structure.

### Advantageous Effects of Invention

In the present invention, a resin material model is generated in a design space set along surfaces of all or some automotive parts in a body-in-white structure of an automotive body, and optimization analysis for obtaining an optimized shape of the resin material model for improving vibration-damping properties of a vibration noise reduction target part is performed. As a result, it is possible to obtain the optimized shape of the resin material to be patched or coated to the automotive parts constituting the body-in-white structure. As a result, it is possible to design and further manufacture an automotive body in which the vibration-damping properties of the vibration noise reduction target part are improved while maintaining the body performance other than the vibration-damping properties such as the body stiffness. In addition, by setting a two-dimensional space along the surface of only one surface of the automotive part as a design space and performing optimization analysis for obtaining the optimized shape of the resin material model, it is possible to obtain a plate shape or a sheet shape that can be easily manufactured.

### Brief Description of Drawings

FIG. 1 is a block diagram illustrating an automotive body design apparatus according to a first embodiment of the present invention.
FIG. 2 is a diagram illustrating an example of a body-in-white structure of an automotive body to be analyzed in the first embodiment, and a part to which vibration is input and a vibration noise reduction target part in optimization analysis.
FIG. 3 is a flowchart illustrating a flow of processing in an automotive body design method according to the first embodiment of the present invention.
FIG. 4 is a graph illustrating a frequency response of equivalent emission power of a floor panel obtained as an example of vibration characteristics used for evaluation of vibration-damping properties of the floor panel using the floor panel as a vibration noise reduction target part in the first embodiment.
FIG. 5 is a diagram illustrating (a) a design space set as a space between automotive parts and a resin material model before optimization analysis, and (b) an optimization analysis model generated by connecting the resin material model before optimization analysis to a body-in-white structure in a first example.
FIG. 6 is a diagram illustrating an optimized shape resin material model obtained by optimization analysis in the first example.
FIG. 7 is a graph illustrating a frequency response of equivalent emission power of a floor panel in a body-in-white structure in which the optimized shape resin material model is provided in the space between automotive parts in the first example (dashed line: original body-in-white structure, solid line: body-in-white structure provided with the optimized shape resin material model).
FIG. 8 is a diagram illustrating (a) a design space set only on one surface of an automotive part and a resin material model before optimization analysis, and (b) an optimization analysis model generated by connecting the resin material model before optimization analysis to a body-in-white structure in a second example.
FIG. 9 is a diagram illustrating an optimized shape resin material model obtained by optimization analysis in the second example.
FIG. 10 is a graph illustrating a frequency response of equivalent emission power of a floor panel in a body-in-white structure in which the optimized shape resin material model is provided in one surface of the automotive part in the second example (dashed line: original body-in-white structure, solid line: body-in-white structure provided with the optimized shape resin material model). Description of Embodiments

Prior to describing a first embodiment and a second embodiment of the present invention, a body-in-white structure of an automotive body as an object of the present invention will be described. In the drawings of the present application, an X-axis direction, a Y-axis direction, and a Z-axis direction indicate a body front-rear direction, a body width direction, and a body up-down direction, respectively.

### <Body-in-White Structure>

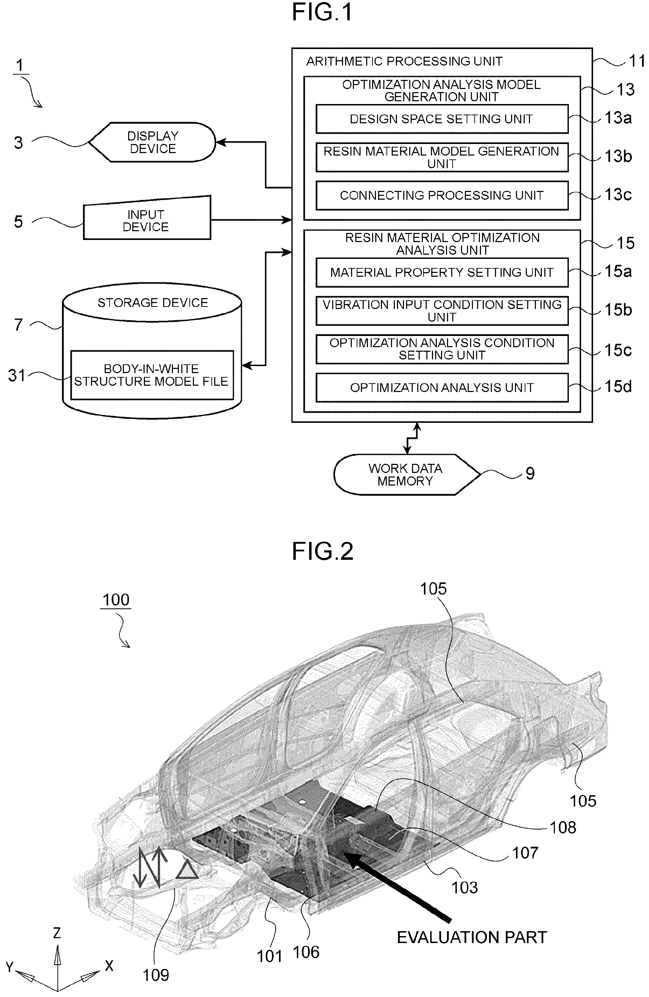

As illustrated in FIG. 2 as an example, a body-in-white structure 100 of an automotive body includes body frame parts, reinforcement parts, and automotive parts such as panel parts. The body frame parts are components constituting a body frame of an automobile, and a front side member 101, a side sill 103, a rear side member 105, a lower A-pillar 106, a tunnel 108, and the like can be exemplified. The reinforcement parts are components provided on each of body frame parts to reinforce the body frame parts, and a reinforcement (not illustrated) or the like can be exemplified. The panel parts are outer panel and an inner panel as components having a thin plate structure, and a floor panel 107 and the like can be exemplified.

In the body-in-white structure 100, a panel part such as the floor panel 107 can be exemplified as a part that is a reduction target of vibration noise.

As will be described later, the present invention performs optimization analysis for obtaining an optimized shape of a resin material to be patched or coated to the automotive part constituting the body-in-white structure 100. As such, the body-in-white structure 100 includes automotive parts modeled with shell elements and/or solid elements. Element information, material properties, and the like of each automotive part modeled with shell elements and/or solid elements are stored in a body-in-white structure model file 21 (FIG. 1) to be described later.

### [First Embodiment]

### <Automotive body design apparatus>

An automotive body design apparatus according to a first embodiment of the present invention is configured to design the automotive body in which a resin material is patched or coated to the automotive parts constituting the body-in-white structure 100 of the automotive body to improve vibration-damping properties of a vibration noise reduction target part in the body-in-white structure 100. As illustrated in FIG. 1 as an example, an automotive body design apparatus 1 is configured by a personal computer (PC) or the like, and includes a display device 3, an input device 5, a storage device 7, a work data memory 9, and an arithmetic processing unit 11. In the automotive body design apparatus 1, the display device 3, the input device 5, the storage device 7, and the work data memory 9 are connected to the arithmetic processing unit 11, and the respective functions are executed by a command from the arithmetic processing unit 11. Hereinafter, each configuration of the automotive body design apparatus 1 will be described.

The display device 3 is used for displaying an analysis result or the like, and includes a liquid crystal monitor or the like. The input device 5 is used for a display instruction of the body-in-white structure model file 21, condition input by an operator, and the like, and includes a keyboard, a mouse, and the like. The storage device 7 is used for storing various files such as the body-in-white structure model file 21, and includes a hard disk or the like. The work data memory 9 is used for temporary storage and calculation of data used by the arithmetic processing unit 11, and includes a random access memory (RAM) or the like.

As illustrated in FIG. 1, the arithmetic processing unit 11 includes an optimization analysis model generation unit 13 and a resin material optimization analysis unit 15, and is configured by a central processing unit (CPU) such as a PC. Each of the units functions when the CPU executes a predetermined program. The function of each of the above units in the arithmetic processing unit 11 will be described below.

### <<Optimization Analysis Model Generation Unit>>

The optimization analysis model generation unit 13 generates an optimization analysis model that performs optimization analysis for an optimized shape of a resin material to be patched or coated to all or some automotive parts in the body-in-white structure 100. As illustrated in FIG. 1, the optimization analysis model generation unit 13 includes a design space setting unit 13a, a resin material model generation unit 13b, and a connecting processing unit 13c.

### (Design Space Setting Unit)

The design space setting unit 13a sets a design space to be a target of optimization analysis, along the surfaces of all or some automotive parts in the body-in-white structure 100.

The automotive parts for which the design space is set are preferably automotive parts on which a resin material can be patched or coated without impairing the appearance of the automotive body, or components in which a space for patching or coating the resin material is secured.

The design space setting unit 13a may set the design space to the space between the automotive parts, or may set a two-dimensional space along the surface of the automotive parts as the design space. This makes it easy to secure a space for patching or coating the resin material, or to prevent the appearance of the automotive body from being impaired by patching or coating the resin material.

In the first embodiment, in a case where a design section is set in a space between the automotive parts, a space having a thickness of 25 mm or less is targeted as a guide of a space where a resin material can be installed. Examples of the space between the automotive parts for which the design space is set include a space formed between a body frame part such as a side sill, a front side member, a tunnel, and a front pillar and a reinforcement disposed inside as the reinforcement part of the body frame part.

In addition, examples of the surface of the automotive parts for which the design space is set include a surface on the inner side or the outer side of the body frame part such as a side sill, a lower A-pillar, a front side member, a tunnel, a front pillar, or a center pillar. Furthermore, a surface on the vehicle interior side of a panel part such as a door panel, a roof panel, or a floor panel can also be exemplified.

### (Resin Material Model Generation Unit)

The resin material model generation unit 13b generates, in the design space set by the design space setting unit 13a, a resin material model that is modeled with shell elements or solid elements and performs optimization analysis processing. In addition, in a case where the design space set by the design space setting unit 13a is a two-dimensional space along the surface of the automotive part, the resin material model generation unit 13b generates a resin material model that is modeled with shell elements and performs optimization analysis processing. This is to obtain an optimized shape of a plate-shaped or sheet-shaped resin material model that can be easily manufactured, by the optimization analysis processing.

### (Connecting Processing Unit)

The connecting processing unit 13c connects the resin material model generated by the resin material model generation unit 13b to the automotive part in the body-in-white structure 100. The optimization analysis model can be generated by connecting the resin material model to the automotive part by the connecting processing unit 13c.

The resin material model and the automotive part in the body-in-white structure 100 may be connected by, for example, connecting (rigid joint or elastic joint) a node of the resin material model and a node of the automotive part using an element (rigid body element, elastic body element, or elastic-plastic body element). Alternatively, the node of the resin material model and the node of the automotive part may be shared to connect the resin material model and the automotive part.

### <<Resin Material Optimization Analysis Unit>>

The resin material optimization analysis unit 15 performs optimization analysis on an optimized shape of a resin material to be patched or coated to the automotive part by using the optimization analysis model generated by the optimization analysis model generation unit 13. As illustrated in FIG. 1, the resin material optimization analysis unit 15 includes a material property setting unit 15a, a vibration input condition setting unit 15b, an optimization analysis condition setting unit 15c, and an optimization analysis unit 15d.

### (Material Property Setting Unit)

The material property setting unit 15a sets at least the elastic coefficient, the density, and the attenuation rate as the material properties of the resin material model. The elastic coefficient, the density, and the attenuation rate set as the material properties of the resin material model may be set as follows.

The larger the value of the elastic coefficient (or storage modulus) of the resin material, the stronger the influence on the vibration characteristics, and the vibration-damping properties of the vibration noise reduction target part can be improved. In addition, the density (density after curing) of the resin material not only affects the vibration characteristics but also greatly affects the weight reduction of automotive body, and the smaller the value, the higher the effect on the vibration characteristics and the weight reduction of automotive body. Therefore, as the elastic coefficient and the density of the resin material, a value of the resin material having a large ratio of the elastic coefficient to the density (elastic coefficient-to-density ratio) (high stiffness in terms of the density ratio) may be set, and may be preferably 1000 (MPa/g•cm⁻³) or more, and more preferably 1400 (MPa/g•cm⁻³) or more. In addition, the elastic coefficient may be set within a range of 200 MPa or more and 6 GPa or less, and the density may be set within a range of 0.7 g/cm³ or more and 1.8 g/cm³ or less. In addition, the attenuation rate (or attenuation coefficient tanδ) of the resin material is not significantly affected in the optimization analysis, but it is preferable to set a value corresponding to the actual attenuation rate of the resin material, and it is preferable to set the attenuation rate within a range of 0.1 or more and 0.15 or less.

### (Vibration Input Condition Setting Unit)

The vibration input condition setting unit 15b sets a vibration input condition regarding vibration to be applied to the optimization analysis model in the optimization analysis.

The vibration input condition setting unit 15b sets an amplitude (magnitude of vibration), a frequency, and a part to which vibration is applied in the body-in-white structure 100, as vibration input conditions. The vibration input condition may be appropriately set on the assumption of, for example, vibration input to the body-in-white structure 100 during driving of the automobile.

As illustrated in FIG. 2, a connecting portion (a triangle mark in the drawing) between a front subframe 109 and a lower arm (not illustrated) can be exemplified as the part to which the vibration is applied.

### (Optimization Analysis Condition Setting Unit)

The optimization analysis condition setting unit 15c sets, as optimization analysis conditions, an objective function regarding the vibration characteristics used for evaluation of vibration-damping properties of the vibration noise reduction target part in the optimization analysis model, and a constraint condition regarding the weight or volume of the resin material model.

The objective function is a condition to be set according to the vibration-damping properties used for evaluation of the vibration characteristics of the vibration noise reduction target part. The vibration characteristics can be, for example, the vibration intensity of the vibration noise reduction target part. Examples of the vibration intensity include frequency response values such as acceleration, inertance, or equivalent emission power (ERP) in a predetermined frequency band, or a function using these as variables.

The vibration noise reduction target part may be appropriately set according to an instruction of the operator. As illustrated in FIG. 2, the floor panel 107 in the body-in-white structure 100 can be exemplified as the vibration noise reduction target part.

The inertance is a vibration characteristic represented by a ratio of a force input to an object and acceleration generated by the force, and is also called a vibrational transfer function.

The equivalent emission power is an index that simply expresses a level of sound emitted by a vibrating structure, and is a vibration characteristic expressed on the basis of the idea that a normal component of the vibration speed of the structure gives energy to an acoustic space.

Examples of the function using the acceleration, inertance, or equivalent emission power as a variable include a function that provides an average value or a maximum value of acceleration or the like at a plurality of positions on the automotive part (panel part or the like) as the vibration noise reduction target part.

The constraint condition is a constraint on the weight or volume of the resin material model in performing the optimization analysis of the resin material model for improving the vibration-damping properties of the vibration noise reduction target part using the optimization analysis model.

As the constraint condition regarding the weight, for example, a constraint that the weight of the resin material model is a predetermined weight or less can be set. In addition, as the constraint condition regarding the volume, a constraint that a ratio of the volume of the resin material model based on the volume of the design space set in the body-in-white structure 100 is a predetermined value or less can be set. The constraint condition on the weight and volume of the resin material model may be set based on the total weight and volume of the optimization analysis model.

### (Optimization Analysis Unit)

The optimization analysis unit 15d performs optimization analysis for obtaining an optimized shape of the resin material model in the optimization analysis model under the vibration input condition set by the vibration input condition setting unit 15b and the optimization analysis condition set by the optimization analysis condition setting unit 15c.

For example, topology optimization may be applied to the optimization analysis by the optimization analysis unit 15d. In the topology optimization using a densimetry, an optimized shape of the resin material model is obtained by setting virtual element densities (material densities) of the elements (shell elements or solid elements) of the resin material model as design variables and performing optimization analysis processing to leave or erase the elements. Furthermore, the optimal position of the resin material model can be obtained from the positions of the elements remaining in the optimization analysis processing.

### <Automotive Body Design Method>

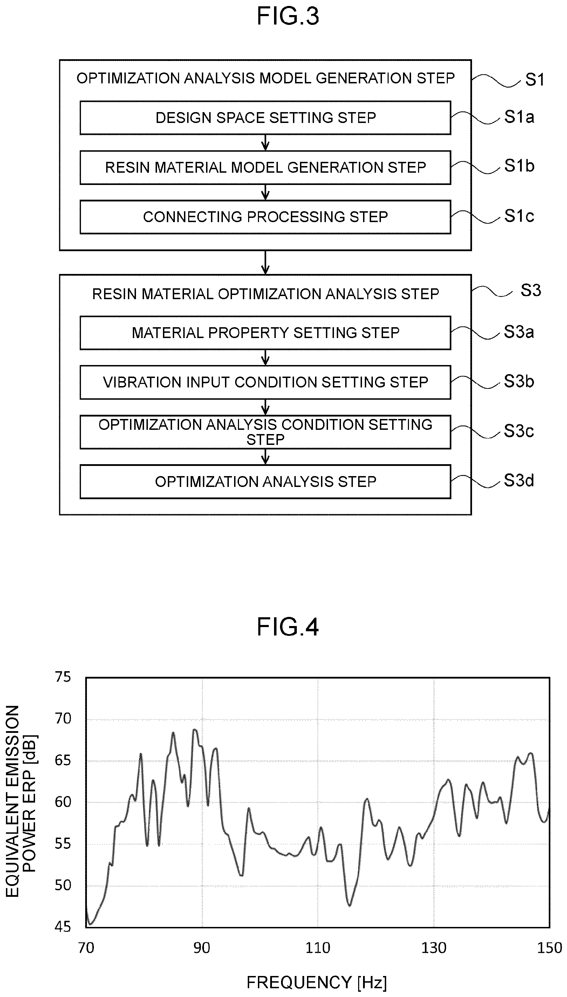

An automotive body design method according to the first embodiment includes designing the automotive body in which the resin material is patched or coated to the automotive parts constituting the body-in-white structure 100 of the automotive body to improve vibration-damping properties of the vibration noise reduction target part in the body-in-white structure 100. The automotive body design method according to the first embodiment causes a computer to execute each step illustrated in FIG. 3, and includes an optimization analysis model generation step S1 and a resin material optimization analysis step S3. Each step will be described below with reference to the flowchart illustrated in FIG. 3. In the following description, each step is executed using the automotive body design apparatus 1 (FIG. 1) according to the first embodiment of the present invention configured by a computer.

### <<Optimization Analysis Model Generation Step>>

The optimization analysis model generation step S1 is a step of generating an optimization analysis model for obtaining an optimized shape of the resin material to be patched or coated to the automotive parts in the body-in-white structure 100. As illustrated in FIG. 3, the optimization analysis model generation step S1 includes a design space setting step S1a, a resin material model generation step S1b, and a connecting processing step S1c. In the first embodiment, the optimization analysis model generation step S1 is executed by the optimization analysis model generation unit 13 of the automotive body design apparatus 1.

### (Design Space Setting Step)

The design space setting step S1a is a step of setting a design space to be a target of optimization analysis, along the surfaces of all or some automotive parts in the body-in-white structure 100. In the first embodiment, the design space setting step S1a is executed by the design space setting unit 13a of the automotive body design apparatus 1.

In the design space setting step S1a, the design space may be set to the space between the automotive parts, or a two-dimensional space along the surface of the automotive parts may be set as the design space. This makes it easy to secure a space for patching or coating the resin material, or to prevent the appearance of the automotive body from being impaired by patching or coating the resin material.

### (Resin Material Model Generation Step)

The resin material model generation step S1b is a step of generating, in the design space set in the design space setting step S1a, the resin material model that is modeled with shell elements or solid elements and performs optimization analysis processing. In the first embodiment, the resin material model generation step S1b is executed by the resin material model generation unit 13b of the automotive body design apparatus 1.

In a case where the design space set in the design space setting step S1a is a two-dimensional space along the surface of the automotive part, the resin material model that is modeled with shell elements and performs optimization analysis processing is generated. This is to obtain an optimized shape of a plate-shaped or sheet-shaped resin material model that can be easily manufactured, by the optimization analysis processing.

### (Connecting Processing Step)

The connecting processing step S1c connects the resin material model generated in the resin material model generation step S1b to the automotive part in the body-in-white structure 100. In the first embodiment, the connecting processing step S1c is executed by the connecting processing unit 13c of the automotive body design apparatus 1. The optimization analysis model can be generated by connecting the resin material model to the automotive part in the connecting processing step S1c.

In the connecting processing step S1c, the resin material model and the automotive part in the body-in-white structure 100 may be connected by, for example, connecting (rigid joint or elastic joint) a node of the resin material model and a node of the automotive part using an element (rigid body element, elastic body element, or elastic-plastic body element). Alternatively, the connecting may be performed by sharing the node of the resin material model and the node of the automotive part.

### <<Resin Material Optimization Analysis Step>>

The resin material optimization analysis step S3 is a step of performing optimization analysis of obtaining an optimized shape of the resin material for improving the vibration-damping properties of the vibration noise reduction target part using the optimization analysis model generated in the optimization analysis model generation step S1. As illustrated in FIG. 3, the resin material optimization analysis step S3 includes a material property setting step S3a, a vibration input condition setting step S3b, an optimization analysis condition setting step S3c, and an optimization analysis step S3d. In the first embodiment, the resin material optimization analysis step S3 is executed by the resin material optimization analysis unit 15 of the automotive body design apparatus 1.

### (Material Property Setting Step)

The material property setting step S3a is a step of setting at least the elastic coefficient, the density, and the attenuation rate as the material properties of the resin material model. In the first embodiment, the material property setting step S3a is executed by the material property setting unit 15a of the automotive body design apparatus 1.

As the material properties of the resin material model, the elastic coefficient may be set within a range of 200 MPa or more and 6 GPa or less, the density may be set within a range of 0.7 g/cm³ or more and 1.8 g/cm³ or less, and the attenuation rate may be set within a range of 0.1 or more and 0.15 or less.

### (Vibration Input Condition Setting Step)

The vibration input condition setting step S3b sets a vibration input condition regarding vibration to be applied to the optimization analysis model in the optimization analysis. In the first embodiment, the vibration input condition setting step S3b is executed by the vibration input condition setting unit 15b of the automotive body design apparatus 1.

In the vibration input condition setting step S3b, an amplitude (magnitude of vibration), a frequency (vibration rate), and a part to which vibration is applied are set as vibration input conditions. The vibration input condition may be appropriately set on the assumption of, for example, vibration input to the body-in-white structure 100 during driving of the automobile.

As illustrated in FIG. 2, a connecting portion (a triangle mark in the drawing) between the front subframe 109 and the lower arm can be exemplified as the part to which the vibration is applied.

### (Optimization Analysis Condition Setting Step)

The optimization analysis condition setting step S3c is a step of setting, as optimization analysis conditions, an objective function regarding the vibration characteristics used for evaluation of vibration-damping properties of the vibration noise reduction target part in the optimization analysis model, and a constraint condition regarding the weight or volume of the resin material model. In the first embodiment, the optimization analysis condition setting step S3c is executed by the optimization analysis condition setting unit 15c of the automotive body design apparatus 1.

In the optimization analysis condition setting step S3c, the objective function can minimize the vibration intensity of the vibration noise reduction target part in the optimization analysis model. Examples of the vibration intensity include frequency response values such as acceleration, inertance, or equivalent emission power (ERP) in a predetermined frequency band, or a function using these as variables.

### (Optimization Analysis Step)

The optimization analysis step S3d performs optimization analysis for obtaining an optimized shape of the resin material model in the optimization analysis model under the vibration input condition set in the vibration input condition setting step S3b and the optimization analysis condition set in the optimization analysis condition setting step S3c. In the first embodiment, the optimization analysis step S3d is executed by the optimization analysis unit 15d of the automotive body design apparatus 1.

For example, topology optimization may be applied to the optimization analysis in the optimization analysis step. In a case where topology optimization is applied, the optimal position of the resin material model can be obtained from the positions of the elements remaining in the optimization analysis processing.

### <Automotive Body Design Program>

The above description of the first embodiment relates to the automotive body design apparatus and method. However, the first embodiment can be configured as an automotive body design program that causes each unit in the arithmetic processing unit 11 of the automotive body design apparatus 1 (FIG. 1) configured by a computer to function.

That is, the automotive body design program according to the first embodiment includes designing the automotive body in which the resin material is patched or coated to the automotive parts constituting the body-in-white structure 100 of the automotive body to improve vibration-damping properties of the vibration noise reduction target part in the body-in-white structure 100. The automotive body design program according to the first embodiment causes a computer to function as the optimization analysis model generation unit 13 and the resin material optimization analysis unit 15 as in the arithmetic processing unit 11 illustrated in FIG. 1.

The automotive body design program according to the first embodiment causes the computer to function as the optimization analysis model generation unit 13, thereby causing each unit of the optimization analysis model generation unit 13 to function. As illustrated in FIG. 1 described above, the optimization analysis model generation unit 13 includes the design space setting unit 13a, the resin material model generation unit 13b, and the connecting processing unit 13c.

Furthermore, the automotive body design program according to the first embodiment causes the computer to function as the resin material optimization analysis unit 15, thereby causing each unit of the resin material optimization analysis unit 15 to function. As illustrated in FIG. 1 described above, the resin material optimization analysis unit 15 includes the material property setting unit 15a, the vibration input condition setting unit 15b, the optimization analysis condition setting unit 15c, and the optimization analysis unit 15d.

As described above, in the automotive body design apparatus, method, and program according to the first embodiment, an optimized shape of the resin material to be patched or coated to the surface of the automotive parts constituting the body-in-white structure of the automotive body is obtained. As a result, it is possible to design an automotive body in which the vibration-damping properties of the vibration noise reduction target part in the body-in-white structure are improved while maintaining the body performance other than the vibration-damping properties such as the body stiffness.

In the first embodiment, the design space is set in either the space between the automotive parts or only one surface of the automotive part. However, the present invention is not limited thereto, and the design space may be set in both the space between the automotive parts and one surface of the automotive part, or the design space may be set in both surfaces of the automotive part.

In addition, in the first embodiment, the material property of the resin material model is set for the optimization analysis model in which the resin material model is connected to the body-in-white structure 100, but the material property may be set for the resin material model before being connected to the body-in-white structure 100.

Furthermore, as illustrated in FIG. 2, the first embodiment is a case where the number of parts to which the vibration is applied in the optimization analysis model in the optimization analysis is one, but in the present invention, the number of parts to which the vibration is applied may be two or more. In a case where the vibration is applied to a plurality of parts, vibration having the same amplitude and frequency may be applied to these portions, vibration having different amplitude or frequency may be applied, or the phases of vibration may be shifted from each other.

In addition, in the present invention, the optimization analysis for obtaining an optimized shape of the resin material model is not limited to the above-described topology optimization, and may be optimization analysis by another calculation method. In addition, for the optimization analysis, for example, analysis software using a commercially available finite element method can also be used.

### [Second Embodiment]

The automotive body design method according to the first embodiment described above includes designing the automotive body in which the resin material is patched or coated to the automotive parts constituting the body-in-white structure 100 of the automotive body to improve vibration-damping properties of the vibration noise reduction target part.

However, the present invention can be configured as a manufacturing method of an automotive body for manufacturing an automotive body in which a resin material is patched or coated to automotive parts constituting a body-in-white structure of the automotive body to improve vibration-damping properties of a vibration noise reduction target part in the body-in-white structure.

In the manufacturing method of the automotive body according to a second embodiment, first, an optimized shape of the resin material model to be patched or coated to all or some automotive parts in the optimization analysis model is obtained using the automotive body design method according to the first embodiment described above. Next, on the basis of the obtained optimized shape of the resin material model, the optimized shape and position of the resin material to be patched or coated to the automotive part for which the optimized shape has been obtained are determined. Then, the resin material of which the shape and position have been determined is patched or coated to the automotive part in the body-in-white structure.

Examples of an aspect in which the resin material is patched or coated to the automotive part include the following. As a specific example of the aspect of patching the resin material, first, numerical control data (NC data) for NC processing is generated on the basis of the optimized shape of the resin material model in the optimization analysis model, an injection molding metal mold is created by an NC machine tool, and the resin material is manufactured by injection molding. Then, the manufactured resin material is patched on the automotive part in the body-in-white structure on the basis of the position of the resin material model having the optimized shape in the optimization analysis model.

In addition, as a specific example of the aspect of coating the resin material, the optimized shape and position of the resin material model in the optimization analysis model are converted into the NC data. Then, the resin material is coated to the automotive part in the body-in-white structure by operating a robot that coats the resin material using the converted NC data. The resin material to be coated may be a liquid resin or a foam resin.

As described above, with the manufacturing method of the automotive body according to the second embodiment, it is possible to manufacture the automotive body in which vibration-damping properties of the vibration noise reduction target part are improved while maintaining body performances other than the vibration-damping properties such as body stiffness.

### [Examples]

An analysis for verifying the effects of improving the vibration-damping properties of the vibration noise reduction target part in the body-in-white structure of the automotive body has been performed by the automotive body design method, apparatus, and program according to the present invention, and the analysis will be described below.

In the analysis, the body-in-white structure 100 illustrated in FIG. 2 was set as the analysis target, and the floor panel 107 in the body-in-white structure 100 was set as the vibration noise reduction target part. Then, for the improvement of the vibration-damping properties of the floor panel 107, optimization analysis was performed on the optimized shape of the resin material to be patched or coated to some automotive parts in the body-in-white structure 100.

In the optimization analysis, assuming road noise during the driving of an automobile, vibration input conditions for inputting vibration with an amplitude of 1 N and a frequency of 1 Hz to 200 Hz to a part where the front subframe 109 and the lower arm are connected (a part indicated by a triangle mark in FIG. 2) were set. Then, the frequency response of the equivalent emission power of the floor panel 107 in the frequency band ranging from 100 Hz to 200 Hz was used as the evaluation target of the vibration-damping properties.

FIG. 4 illustrates a result of the frequency response of the equivalent emission power of the floor panel 107 obtained under the above-described vibration input conditions.

The optimization analysis on the optimized shape of the resin material was performed for an aspect (first example, second example) in which a resin material is patched or coated to the space between automotive parts and an aspect (third example) in which a resin material is patched or coated to only one surface of the automotive part.

### <First Example>

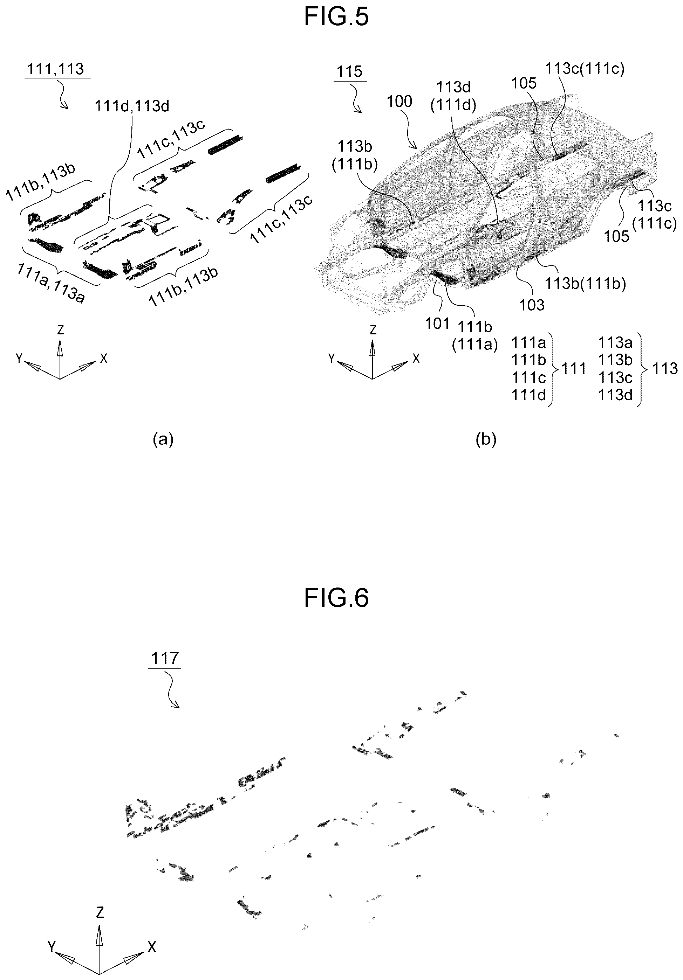

In the first example, as illustrated in FIG. 5(b), a design space 111 was set in the space between automotive parts in the body-in-white structure 100. As the space between the automotive parts, design spaces 111a, 111b, 111c, and 111d and the like were set for the front side member 101, the side sill 103, the lower A-pillar 106, the rear side member 105, the tunnel 108, and the like.

Next, the set design space 111 was divided into elements using solid elements to generate a resin material model 113. In the generation of the resin material model 113, resin material models 113a, 113b, 113c, and 113d were generated for the design spaces 111a, 111b, 111c, and 111d and the like set in the body-in-white structure 100. FIG. 5(a) illustrates the design space 111 and the resin material model 113 taken out and displayed.

Subsequently, the generated resin material model 113 was connected to the body-in-white structure 100, and an optimization analysis model 115 was generated as illustrated in FIG. 5(b). In the generation of the optimization analysis model 115, the surface of the resin material model 113 and the automotive part in the vicinity thereof (for example, the resin material model 113a and the front side member 101 in the vicinity thereof) were connected by the rigid body beam element.

Subsequently, the material property of the resin material model 113 in the optimization analysis model 115 was set. In the first example, as the material properties of the resin material model 113, an elastic coefficient of 6.0 GPa, a density of 1.4 g/cm³ (an elastic coefficient-to-density ratio of 4285 MPa/g•cm⁻³), and an attenuation rate of 0.15 were set.

Subsequently, an objective function and a constraint condition were set as the optimization analysis conditions in the optimization analysis. The objective function was to minimize the maximum value of the equivalent emission power of the floor panel 107 in the frequency band from 100 Hz to 200 Hz. On the other hand, as the constraint condition, the volume of the resin material model 113 was 10% or less of the volume of the design space set in the body-in-white structure 100.

Then, under the vibration input condition and the optimization analysis condition set as described above, the optimization analysis for obtaining the optimized shape of the resin material model 113 in the optimization analysis model 115 was performed. For the optimization analysis, topology optimization using the densimetry was applied.

FIG. 6 illustrates the optimized shape of the resin material model 113 (optimized shape resin material model 117) obtained by the optimization analysis.

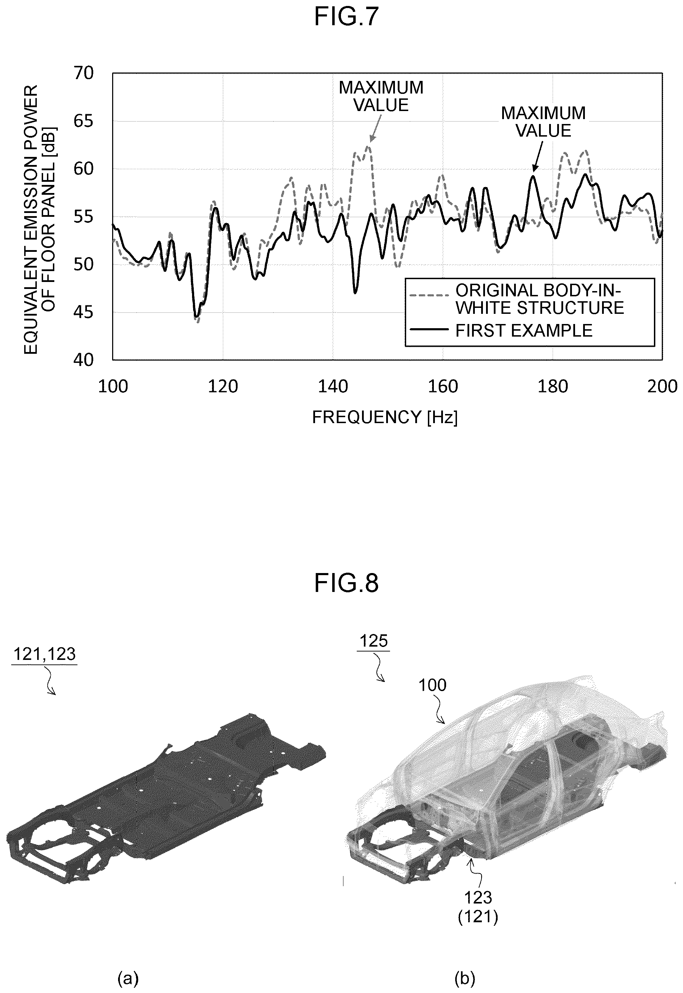

Furthermore, the optimized shape resin material model 117 was connected to the body-in-white structure 100, and the same vibration input condition as that of the optimization analysis was given to calculate the frequency response of the equivalent emission power of the floor panel 107. FIG. 7 illustrates a graph of the frequency response of the equivalent emission power of the floor panel in the body-in-white structure 100 to which the optimized shape resin material model is connected. In addition, FIG. 7 illustrates, as a comparison, a frequency response of the equivalent emission power of the floor panel 107 obtained for the body-in-white structure 100 before the optimized shape resin material model 117 is connected (dashed line).

As illustrated in FIG. 7, in the body-in-white structure 100 to which the optimized shape resin material model 117 is connected, the maximum value of the equivalent emission power ERP of the floor panel 107 in the frequency band from 100 Hz to 200 Hz was reduced by 3.0 dB. From this result, it can be seen that the vibration-damping properties of the floor panel 107 that is the vibration noise reduction target part are improved.

### <Second Example>

In the second example, the material properties (elastic coefficient, density) of the resin material model 113 in the optimization analysis model 115 in the first example were changed, and the elastic coefficient-to-density ratio was set in the range of 800 to 4300 MPa/g•cm⁻³ together with the first example. Then, as in FIG. 7 of the first example, in the body-in-white structure 100 to which the optimized shape resin material model 117 is connected, the reduction amount of the maximum value of the equivalent emission power ERP (ERP reduction amount) of the floor panel 107 in the frequency band from 100 Hz to 200 Hz was obtained. The ERP reduction amount was calculated with reference to the maximum value of the equivalent emission power of the floor panel 107 obtained for the original body-in-white structure 100 to which the optimized shape resin material model 117 was not connected.

Table 1 illustrates the material properties (elastic coefficient, density, and attenuation rate) of the resin material model 113, the elastic coefficient-to-density ratio of the resin, the maximum value of the equivalent emission power ERP, and the ERP reduction amount. Table 1 also illustrates the maximum value of the equivalent emission power ERP obtained for the original body-in-white structure 100.

**Table 1**

| | Elastic Coefficient MPa | Density g/cm⁻³ | Attenuation Rate | Elastic Coefficient-to-Density Ratio [MPa/g•cm-³] | Maximum value of Equivalent Emission Power ERP [dB] | ERP Reduction Amount [dB] |
|---|---|---|---|---|---|---|
| Original Body-in-White Structure | - | - | - | - | 62.4 | - |
| First Example | 6000 | 1.4 | 0.15 | 4286 | 59.4 | 3.0 |
| Sub-example a of Second Example | 560 | 0.7 | 0.15 | 800 | 61.9 | 0.5 |
| Sub-example b of Second Example | 1700 | 1.7 | 0.15 | 1000 | 61.4 | 1.0 |
| Sub-example c of Second Example | 840 | 0.7 | 0.15 | 1200 | 61.2 | 1.2 |
| Sub-example d of Second Example | 2380 | 1.7 | 0.15 | 1400 | 60.1 | 2.3 |
| Sub-example e of Second Example | 1920 | 1.2 | 0.15 | 1600 | 59.7 | 2.7 |
| Sub-example f of Second Example | 3000 | 1.2 | 0.15 | 2500 | 59.6 | 2.8 |
| Sub-example g of Second Example | 4200 | 1.2 | 0.15 | 3500 | 59.5 | 2.9 |

As the elastic coefficient-to-density ratio was increased, the ERP reduction amount was increased, and in a case where the elastic coefficient-to-density ratio was 1000 MPa/g•cm⁻³ (sub-example b of second example) or more, the ERP reduction amount was 1 dB or more. Furthermore, in a case where the elastic coefficient-to-density ratio was 1400 MPa/g•cm⁻³ (sub-example d of second example) or more, the ERP reduction amount was 2 dB or more, and the ERP reduction amount was gradually improved as the elastic coefficient-to-density ratio was increased to 4286 MPa/g•cm⁻³ (first example) .

From this result, it can be seen that as the elastic coefficient-to-density ratio of the resin material model 113 is larger, the vibration-damping properties of the floor panel 107 that is the vibration noise reduction target part are improved, and the elastic coefficient-to-density ratio may be preferably 1000 (MPa/g•cm⁻³) or more, and more preferably 1400 (MPa/g•cm⁻³) or more.

### <Third Example>

In the third example, as illustrated in FIG. 8(b), a two-dimensional space along the surface of the automotive part (including the floor panel 107) constituting the lower portion of the body-in-white structure 100 was set as a design space 121.

Next, for the set design space 121, as illustrated in FIG. 8(b), a resin material model 123 was generated using shell elements. In generating the resin material model 123 using the shell elements, the thickness of the shell elements was set to 2 mm. FIG. 8(a) illustrates the design space 121 and the resin material model 123 taken out and displayed.

Subsequently, the generated resin material model 123 was connected to the body-in-white structure 100, and an optimization analysis model 125 was generated as illustrated in FIG. 8(b). In the generation of the optimization analysis model 125, the surface of the resin material model 123 and the automotive part in the vicinity thereof were connected by the rigid body beam element.

Subsequently, the material property of the resin material model 123 in the optimization analysis model 125 was set. In the second example, as the material properties of the resin material model 123, an elastic coefficient of 6.0 GPa, a density of 1.4 g/cm³ (an elastic coefficient-to-density ratio of 4286 MPa/g•cm⁻³), and an attenuation rate of 0.15 were set.

Next, an objective function and a constraint condition were set as the optimization analysis conditions. The objective function was to minimize the maximum value of the equivalent emission power of the floor panel 107 in the optimization analysis model 125 in the frequency band from 100 Hz to 200 Hz. On the other hand, as the constraint condition, the volume of the resin material model 123 was 10% or less of the volume of the design space. Then, under the vibration input condition and the optimization analysis condition set as described above, the optimization analysis for obtaining the optimized shape of the resin material model 123 in the optimization analysis model 125 was performed. For the optimization analysis, topology optimization using the densimetry was applied.

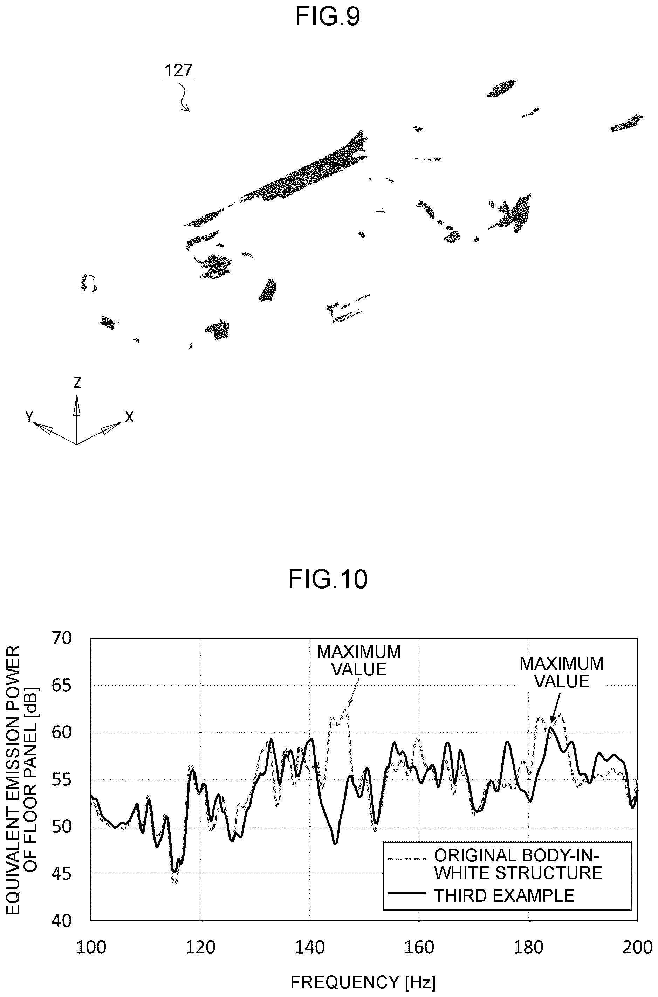

FIG. 9 illustrates the optimized shape of the resin material model 123 (optimized shape resin material model 127) obtained by the optimization analysis.

Furthermore, FIG. 10 illustrates a frequency response of the equivalent emission power of the floor panel 107 calculated by applying the same vibration input condition as that of the optimization analysis to the body-in-white structure 100 to which the optimized shape resin material model 127 is connected.

As illustrated in FIG. 10, in the body-in-white structure 100 to which the optimized shape resin material model 127 is connected, the maximum value of the equivalent emission power ERP of the floor panel 107 in the frequency band from 100 Hz to 200 Hz was reduced by 2.0 dB. From this result, it can be seen that the vibration-damping properties of the floor panel 107 that is the vibration noise reduction target part are improved even in a case where the design space is set only on one surface of the automotive part and the optimized shape resin material model 127 is obtained.

### Industrial Applicability

According to the present invention, it is possible to provide automotive body design method, apparatus, and program for designing an automotive body in which vibration-damping properties of a part that is a reduction target of vibration noise are effectively improved while maintaining body performances other than the vibration-damping properties. Furthermore, according to the present invention, it is possible to provide a manufacturing method of an automotive body for manufacturing the automotive body in which vibration-damping properties of a part that is a reduction target of vibration noise are improved while maintaining body performances other than the vibration-damping properties such as body stiffness.

### Reference Signs List

1 AUTOMOTIVE BODY DESIGN APPARATUS
3 DISPLAY DEVICE
5 INPUT DEVICE
7 STORAGE DEVICE
9 WORK DATA MEMORY
11 ARITHMETIC PROCESSING UNIT
13 OPTIMIZATION ANALYSIS MODEL GENERATION UNIT
13a DESIGN SPACE SETTING UNIT
13b RESIN MATERIAL MODEL GENERATION UNIT
13c CONNECTING PROCESSING UNIT
15 RESIN MATERIAL OPTIMIZATION ANALYSIS UNIT
15a MATERIAL PROPERTY SETTING UNIT
15b VIBRATION INPUT CONDITION SETTING UNIT
15c OPTIMIZATION ANALYSIS CONDITION SETTING UNIT
15d OPTIMIZATION ANALYSIS UNIT
21 BODY-IN-WHITE STRUCTURE MODEL FILE
100 BODY-IN-WHITE STRUCTURE
101 FRONT SIDE MEMBER
103 SIDE SILL
105 REAR SIDE MEMBER
106 LOWER A-PILLAR
107 FLOOR PANEL
108 TUNNEL
109 FRONT SUBFRAME
111 DESIGN SPACE
111a, 111b, 111c DESIGN SPACE
113 RESIN MATERIAL MODEL
113a, 113b, 113c RESIN MATERIAL MODEL
115 OPTIMIZATION ANALYSIS MODEL
117 OPTIMIZED SHAPE RESIN MATERIAL MODEL
121 DESIGN SPACE
123 RESIN MATERIAL MODEL
125 OPTIMIZATION ANALYSIS MODEL
127 OPTIMIZED SHAPE RESIN MATERIAL MODEL

## Claims

1. An automotive body design method causing a computer to execute each of following steps for designing an automotive body in which a resin material is patched or coated to surfaces of automotive parts constituting a body-in-white structure of the automotive body and vibration-damping properties of a vibration noise reduction target part, which is a reduction target of vibration noise in the body-in-white structure, are improved, the automotive body design method comprising:
an optimization analysis model generation step of generating an optimization analysis model of performing optimization analysis on an optimized shape of the resin material to be patched or coated to all or some of the automotive parts in the body-in-white structure; and
a resin material optimization analysis step of performing the optimization analysis using the generated optimization analysis model, wherein
the optimization analysis model generation step includes
a design space setting step of setting a design space to be a target of the optimization analysis along the surfaces of all or some of the automotive parts in the body-in-white structure,
a resin material model generation step of generating, in the set design space, a resin material model that is modeled with shell elements or solid elements and performs optimization analysis processing, and
a connecting processing step of connecting the generated resin material model to the automotive parts in the body-in-white structure, and
the resin material optimization analysis step includes
a material property setting step of setting at least an elastic coefficient, a density, and an attenuation rate as material properties of the resin material model in the optimization analysis model,
a vibration input condition setting step of setting a vibration input condition regarding vibration given to the optimization analysis model in the optimization analysis,
an optimization analysis condition setting step of setting, as an optimization analysis condition, an objective function regarding vibration characteristics used for evaluation of vibration-damping properties of the vibration noise reduction target part in the optimization analysis model, and a constraint condition regarding a weight or volume of the resin material model, and
an optimization analysis step of performing optimization analysis for obtaining the optimized shape of the resin material model in the optimization analysis model under the vibration input condition and the optimization analysis condition.

2. The automotive body design method according to claim 1, wherein in the design space setting step, the design space is set in a gap between the automotive parts.

3. The automotive body design method according to claim 1, wherein in the design space setting step, a two-dimensional space along only one surface of the automotive parts is set as the design space, and in the resin material model generation step, the resin material model is modeled with shell elements.

4. The automotive body design method according to any one of claims 1 to 3, wherein in the optimization analysis condition setting step, the objective function is to minimize a frequency response value of any one of acceleration, inertance, or equivalent emission power in a predetermined frequency band of the vibration noise reduction target part, or minimize a function using the values as variables.

5. An automotive body design apparatus that designs an automotive body in which a resin material is patched or coated to surfaces of automotive parts constituting a body-in-white structure of the automotive body and vibration-damping properties of a vibration noise reduction target part, which is a reduction target of vibration noise in the body-in-white structure, are improved, the automotive body design apparatus comprising:
an optimization analysis model generation unit that generates an optimization analysis model of performing optimization analysis on an optimized shape of the resin material to be patched or coated to all or some of the automotive parts in the body-in-white structure; and
a resin material optimization analysis unit that performs the optimization analysis using the generated optimization analysis model, wherein
the optimization analysis model generation unit includes
a design space setting unit that sets a design space to be a target of the optimization analysis along the surfaces of all or some of the automotive parts in the body-in-white structure,
a resin material model generation unit that generates, in the set design space, a resin material model that is modeled with shell elements or solid elements and performs optimization analysis processing, and
a connecting processing unit that connects the generated resin material model to the automotive parts in the body-in-white structure, and
the resin material optimization analysis unit includes
a material property setting unit that sets at least an elastic coefficient, a density, and an attenuation rate as material properties of the resin material model in the optimization analysis model,
a vibration input condition setting unit that sets a vibration input condition regarding vibration given to the optimization analysis model in the optimization analysis,
an optimization analysis condition setting unit that sets, as an optimization analysis condition, an objective function regarding vibration characteristics used for evaluation of vibration-damping properties of the vibration noise reduction target part in the optimization analysis model, and a constraint condition regarding a weight or volume of the resin material model, and
an optimization analysis unit that performs optimization analysis for obtaining the optimized shape of the resin material model in the optimization analysis model under the vibration input condition and the optimization analysis condition.

6. An automotive body design program for designing an automotive body in which a resin material is patched or coated to surfaces of automotive parts constituting a body-in-white structure of the automotive body and vibration-damping properties of a vibration noise reduction target part, which is a reduction target of vibration noise in the body-in-white structure, are improved, the automotive body design program causing a computer to function as:
an optimization analysis model generation unit that generates an optimization analysis model of performing optimization analysis on an optimized shape of the resin material to be patched or coated to all or some of the automotive parts in the body-in-white structure; and
a resin material optimization analysis unit that performs the optimization analysis using the generated optimization analysis model, wherein
the optimization analysis model generation unit includes
a design space setting unit that sets a design space to be a target of the optimization analysis along the surfaces of all or some of the automotive parts in the body-in-white structure,
a resin material model generation unit that generates, in the set design space, a resin material model that is modeled with shell elements or solid elements and performs optimization analysis processing, and
a connecting processing unit that connects the generated resin material model to the automotive parts in the body-in-white structure, and
the resin material optimization analysis unit includes
a material property setting unit that sets at least an elastic coefficient, a density, and an attenuation rate as material properties of the resin material model in the optimization analysis model,
a vibration input condition setting unit that sets a vibration input condition regarding vibration given to the optimization analysis model in the optimization analysis,
an optimization analysis condition setting unit that sets, as an optimization analysis condition, an objective function regarding vibration characteristics used for evaluation of vibration-damping properties of the vibration noise reduction target part in the optimization analysis model, and a constraint condition regarding a weight or volume of the resin material model, and
an optimization analysis unit that performs optimization analysis for obtaining the optimized shape of the resin material model in the optimization analysis model under the vibration input condition and the optimization analysis condition.

7. A manufacturing method of an automotive body for manufacturing an automotive body in which a resin material is patched or coated to automotive parts constituting a body-in-white structure of the automotive body and vibration-damping properties of a vibration noise reduction target part, which is a reduction target of vibration noise in the body-in-white structure, are improved, the manufacturing method comprising:
obtaining an optimized shape of the resin material by using the automotive body design method according to claim 1 or 2;
determining the optimized shape and a position of the resin material to be patched or coated to the automotive parts on a basis of the obtained optimized shape of the resin material; and
patching or coating the resin material of which the optimized shape and the position are determined, to the automotive parts in the body-in-white structure.
